# EUROPEAN PATENT APPLICATION

(11) **EP 4 131 596 A1**
(43) Date of publication of application: **08.02.2023**
(21) Application number: 20928341.5
(22) Date of filing: 28.12.2020
(51) Int. Cl.: H01M 50/20, B60K 1/04, B60L 50/60, B60L 53/14

(54) **POWER SUPPLY DEVICE, ELECTRIC VEHICLE PROVIDED WITH POWER SUPPLY DEVICE, AND POWER STORAGE DEVICE**

(30) Priority: 31.03.2020 JP 2020063977
(71) Applicant: SANYO Electric Co., Ltd., Daito-shi Osaka 574-8534 (JP)
(72) Inventor: KOGAMI, Nao, Chuo-ku, Osaka-shi, Osaka 540-6207 (JP); HARAZUKA, Kazuhiro, Chuo-ku, Osaka-shi, Osaka 540-6207 (JP); FUJINAGA, Koji, Chuo-ku, Osaka-shi, Osaka 540-6207 (JP)
(74) Representative: Novagraaf International SA
(86) International application number: PCT/JP2020/049216
(87) International publication number: WO 2021/199546

(57) **Abstract**

A power supply device includes: battery block (10) formed by stacking a plurality of battery cells (1) in a thickness with separator (2) interposed therebetween; a pair of end plates (3) disposed on both end surfaces of battery block (10); and binding bar (4) connected to the pair of end plates (3) and configured to fix battery block (10) in a pressurized state via end plates (3). Separator (2) is formed by stacking elastomer layer (5) and plastic foam layer (6) having a larger amount of deformation with respect to a pressing force than elastomer layer (5).

## Description

### TECHNICAL FIELD

The present invention relates to a power supply device in which a large number of battery cells are stacked, and an electric vehicle and a power storage device provided with the power supply device.

### BACKGROUND ART

A power supply device in which a large number of battery cells are stacked is suitable as a power source that is mounted on an electric vehicle and supplies electric power to a motor that drives the vehicle, a power source that is charged with a natural energy such as a solar battery or midnight electric power, and a backup power source in the event of a power failure. In the power supply device having this structure, a separator is sandwiched between the stacked battery cells. The power supply device in which a large number of battery cells are stacked with a separator interposed therebetween fixes the stacked battery cells in a pressurized state in order to prevent positional displacement due to expansion of the battery cells. In order to realize this, in the power supply device, a pair of end plates is disposed on both end surfaces of a battery block in which a large number of battery cells are stacked, and the pair of end plates are connected by a bind bar. (See PTL 1)

### Citation List

### Patent Literature

PTL 1: Unexamined Japanese Patent Publication No. 2018-204708

### SUMMARY OF THE INVENTION

### Technical problem

In the power supply device, a plurality of battery cells are stacked to form a battery block, a pair of end plates are disposed on both end surfaces of the battery block, and the battery cells are held in a pressurized state by a considerably strong pressure from both end surfaces and the pair of end plates are connected by a binding bar. In the power supply device, the battery cells are fixed in a strongly pressurized state to prevent malfunction due to relative movement or vibration of the battery cells. When the power supply device uses, for example, a battery cell with a stacked surface having an area of about 100 cm², the end plates are pressed with a strong force of several tons and fixed with the binding bar. In the power supply device having this structure, a plate-shaped insulating plastic plate is used as the separator in order to insulate the adjacently stacked battery cells with the separator. The separator of the plastic plate cannot absorb the expansion of the battery cells in a state where an internal pressure of each of the battery cells increases and expands, and in this state, a surface pressure between the battery cell and the separator rapidly increases, and an extremely strong force acts on the end plates and the binding bar. For this reason, the end plates and the binding bar are required to have a very strong material and shape, and there is an adverse effect that the power supply device becomes heavy and large, and the material cost increases.

The present invention has been developed to solve the above disadvantages, and an object of the present invention is to provide a technique for absorbing expansion of battery cells by a separator.

### Solution to problem

A power supply device according to an aspect of the present invention includes: a battery block formed by stacking a plurality of battery cells in a thickness with a separator interposed between the battery cells; a pair of end plates disposed on both end surfaces of the battery block; and a binding bar connected to the pair of end plates and configured to fix the battery block in a pressurized state via the end plates. The separator is formed by stacking an elastomer layer, and a plastic foam layer having a larger amount of deformation with respect to a pressing force than the elastomer layer.

An electric vehicle according to an aspect of the present invention includes the above-described power supply device, a motor for traveling to which electric power is supplied from the power supply device, a vehicle body on which the power supply device and the motor are mounted, and wheels driven by the motor to cause the vehicle body to travel.

A power storage device according to an aspect of the present invention includes the above-described power supply device, and a power supply controller that controls charging and discharging to the power supply device, wherein the power supply controller enables charging to the battery cells by electric power from an outside, and performs control to charge the battery cells.

### Advantageous effect of invention

In the power supply device described above, the expansion of the battery cells is absorbed by the separator, and a rapid increase in surface pressure between each of the battery cells and the separator can be suppressed.

### BRIEF DESCRIPTION OF THE DRAWINGS

Fig. 1 is a perspective view of a power supply device according to an exemplary embodiment of the present invention.
Fig. 2 is a vertical cross-sectional view of the power supply device illustrated in Fig. 1.
Fig. 3 is a horizontal cross-sectional view of the power supply device illustrated in Fig. 1.
Fig. 4 is an exploded perspective view illustrating a stacked structure of battery cells and a separator.
Fig. 5 is a partially enlarged cross-sectional view illustrating a stacked structure of battery cells and a separator.
Fig. 6 is an enlarged cross-sectional view of a main part illustrating a state in which a surface of an expanding battery cell is pushed by parallel ridges and deformed into a wave shape.
Fig. 7 is a perspective view illustrating another example of the separator.
Fig. 8 is a partially enlarged cross-sectional view illustrating another example of the separator.
Fig. 9 is a partially enlarged cross-sectional view illustrating another example of the separator.
Fig. 10 is an exploded perspective view illustrating a stacked structure of battery cells and a separator of another example.
Fig. 11 is a block diagram illustrating an example in which a power supply device is mounted on a hybrid vehicle that travels by an engine and a motor.
Fig. 12 is a block diagram illustrating an example in which a power supply device is mounted on an electric vehicle that travels only by a motor.
Fig. 13 is a block diagram illustrating an example of application to a power supply device for power storage.

### DESCRIPTION OF EMBODIMENT

Hereinafter, the present invention will be described in detail with reference to the drawings. Note that, in the following description, terms (e.g., "top", "bottom", and other terms including those terms) indicating specific directions or positions are used as necessary; however, the use of those terms is for facilitating the understanding of the invention with reference to the drawings, and the technical scope of the present invention is not limited by the meanings of the terms. Further, parts denoted by the same reference marks in a plurality of drawings indicate the same or equivalent parts or members.

Furthermore, exemplary embodiments to be described below show a specific example of the technical idea of the present invention, and the present invention is not limited to the exemplary embodiments below. Further, unless otherwise specified, dimensions, materials, shapes, relative dispositions, and the like of the configuration components described below are not intended to limit the scope of the present invention only to them, but are intended to be illustrative. Furthermore, the contents described in one exemplary embodiment or example are also applicable to other exemplary embodiments and examples. Additionally, sizes, positional relationships, and the like of members illustrated in the drawings may be exaggerated for clarity of description.

A power supply device according to a first exemplary embodiment of the present invention includes a battery block formed by stacking a plurality of battery cells in a thickness with a separator interposed between the battery cells, a pair of end plates disposed on both end surfaces of the battery block, and a binding bar connected to the pair of end plates and configured to fix the battery block in a pressurized state via the end plates. The separator is formed by stacking an elastomer layer, and a plastic foam layer having a larger amount of deformation with respect to a pressing force than the elastomer layer.

In the separator of the power supply device described above, since the elastomer layer and the plastic foam layer that is more easily deformed than the elastomer layer are stacked, both the elastomer layer and the plastic foam layer elastically deform and absorb the expansion of each of the battery cells. Since the plastic foam layer is thinly deformed by crushing innumerable bubbles, the plastic foam layer is easily deformed as compared with the elastomer layer, and thus has a small Young's modulus and more effectively absorbs the expansion of the battery cell. When the expansion of the battery cell increases and the pressing force of the separator increases, the plastic foam layer that is easily deformed exceeds an elastic limit and cannot absorb the expansion of the battery cell. The elastomer layer is less likely to deform than the plastic foam layer, and elastically deforms in a region where the plastic foam layer exceeds the elastic limit to absorb the expansion of the battery cell. Accordingly, in the separator in which the elastomer layer and the plastic foam layer are stacked, small expansion of the battery cell is naturally absorbed by the plastic foam layer that is easily deformed, and in a region where the expansion of the battery cell becomes large and the pressing force of the separator becomes strong, the elastomer layer that is hardly deformed absorbs the expansion. Therefore, the separator described above has an advantage of being able to absorb even large expansion while more smoothly absorbing small expansion of the battery cell having a high occurrence frequency. Further, the plastic foam layer can also be expected to have an effect of absorbing dimensional tolerances of the battery cell and the separator.

Furthermore, in the power supply device described above, since the elastomer layer and the plastic foam layer that is more easily deformed than the elastomer layer suppress an increase in surface pressure due to expansion of the battery cell, it is possible to prevent the battery cell from expanding and an excessive stress from acting on the end plates and the binding bar. The plastic foam layer can efficiently absorb small expansion of the battery cell, but when the expansion of the battery cell becomes large and exceeds the elastic limit, the plastic foam layer cannot be elastically deformed and causes a rapid increase in stress of the end plates and the binding bar. However, in a region where the plastic foam layer exceeds the elastic limit, the elastomer layer stacked on the plastic foam layer is elastically deformed to suppress an increase in stress of the end plates and the binding bar, so that it is possible to suppress an increase in maximum stress acting on the end plates and the binding bar due to an increase in expansion of the battery cell. In the power supply device capable of suppressing the maximum stress acting on the end plates and the binding bar, the weight can be reduced by thinning the end plates and the binding bar.

Further, in the power supply device in which both the elastomer layer and the plastic foam layer are elastically deformed to be able to effectively absorb the expansion of the battery cell, it is also possible to suppress the relative position from being shifted due to the expansion of the battery cell. This can also prevent adverse effects of an electrical connection part of the battery cell. This is because, although the stacked battery cells are electrically connected by fixing bus bars of metal sheets to electrode terminals, when the battery cells are displaced relative to each other, an excessive stress acts on the bus bars and the electrode terminals, which causes a failure.

In the power supply device according to a second exemplary embodiment of the present invention, the elastomer layer is a non-foamed synthetic rubber.

In the power supply device according to a third exemplary embodiment of the present invention, the synthetic rubber of the elastomer layer is any one of a fluororubber, an isoprene rubber, a styrene butadiene rubber, a butadiene rubber, a chloropron rubber, a nitrile rubber, a hydrogenated nitrile rubber, a folylisobutylene rubber, an ethylene propylene rubber, an ethylene-vinyl acetate copolymer rubber, a chlorosulfonated polyethylene rubber, an acrylic rubber, an epichlorohydrin rubber, a urethane rubber, a silicone rubber, a thermoplastic olefin rubber, an ethylene propylene diene rubber, a butyl rubber, and a polyether rubber.

In the power supply device according to a fourth exemplary embodiment of the present invention, the plastic foam layer is an open-cell plastic foam.

In this power supply device, the open-cell plastic foam layer is more smoothly crushed, and expansion of the battery cell can be more effectively absorbed. Further, the open-cell plastic foam layer can equalize a surface pressure distribution on the surface of the battery cell to prevent an adverse effect that the pressure locally increases. This is because, in the open-cell plastic foam, air in the pressed and crushed cells flows to the surroundings through the open cells and is easily deformed.

In the power supply device according to a fifth exemplary embodiment of the present invention, the plastic foam layer is a closed-cell plastic foam.

In this power supply device, since closed cells of the plastic foam layer of the separator serve as an air cushion and are elastically deformed, a foam rate of the plastic foam layer can be increased and the material cost can be reduced. Further, the closed-cell air cushion can be elastically deformed in a wide pressure range to absorb expansion of the battery cell.

In the power supply device according to a sixth exemplary embodiment of the present invention, the plastic foam layer is a urethane foam.

In the power supply device according to a seventh exemplary embodiment of the present invention, the elastomer layer includes a comb-teeth-shaped cross-sectional shape by alternately disposing a plurality of rows of parallel ridges and a plurality of rows of parallel grooves on a surface of a plate-shaped part, the surface facing each of the battery cells.

In the power supply device described above, the parallel ridges of the separator locally press an electrode of the battery cell to improve the fluidity of an electrolyte solution. The reason why the comb-teeth-shaped separator in which the parallel ridges and the parallel grooves are alternately provided on the surface facing the battery cell can improve the fluidity of the electrolyte solution is that the electrode has a high density in a region pressed by the parallel ridges, but the electrode has a low density in a region facing the parallel grooves not pressed by the parallel ridges, so that the electrolyte solution easily moves.

In the power supply device according to an eighth exemplary embodiment of the present invention, lateral width (W1) of the parallel ridges and opening width (W2) of the parallel grooves are in a range from 1 mm to 20 mm, inclusive.

In the power supply device according to a ninth exemplary embodiment of the present invention, height (h) of the parallel ridges is in a range from 0.1 mm to 2 mm, inclusive.

In the power supply device according to a tenth exemplary embodiment of the present invention, ratio (W1/W2) between lateral width (W1) of the parallel ridges and opening width (W2) of the parallel grooves are in a range from 0.1 to 10, inclusive.

In the power supply device according to an eleventh exemplary embodiment of the present invention, each of the battery cells includes an electrode that is a plate-shaped electrode in which positive and negative electrode layers extending in a band shape are spirally wound and pressed into a planar shape, and the elastomer layer of the separator is disposed in an attitude in which the parallel ridges and the parallel grooves extend in a width direction of the positive and negative electrode layers that are in a band shape.

In the power supply device according to a twelfth exemplary embodiment of the present invention, the separator includes a two-layer structure of the elastomer layer and the plastic foam layer.

In the power supply device according to a thirteenth exemplary embodiment of the present invention, the separator includes a three-layer structure in which a plurality of the elastomer layers are stacked on both surfaces of the plastic foam layer.

### (First exemplary embodiment)

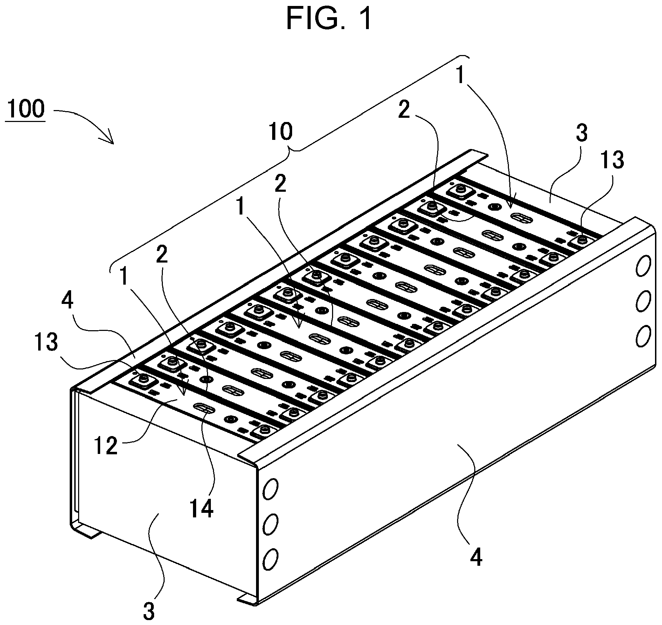

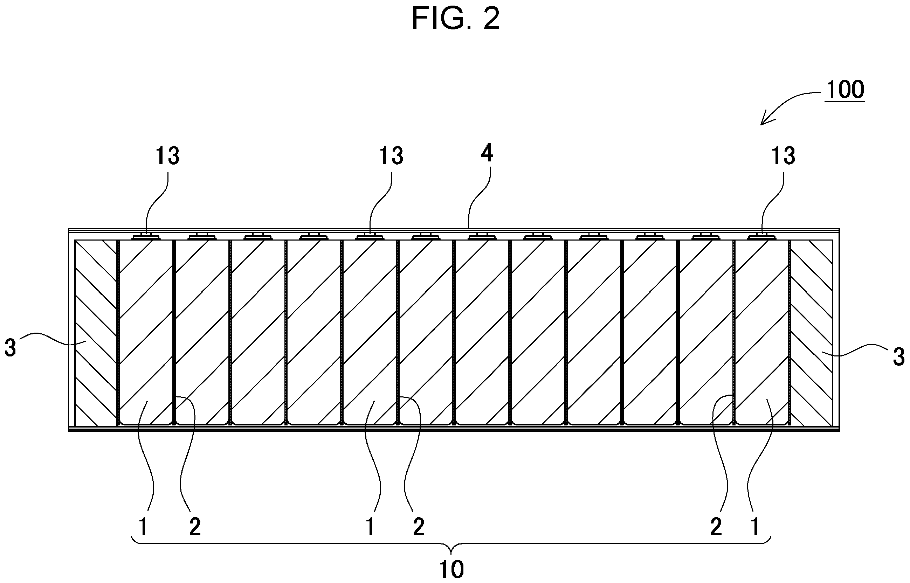

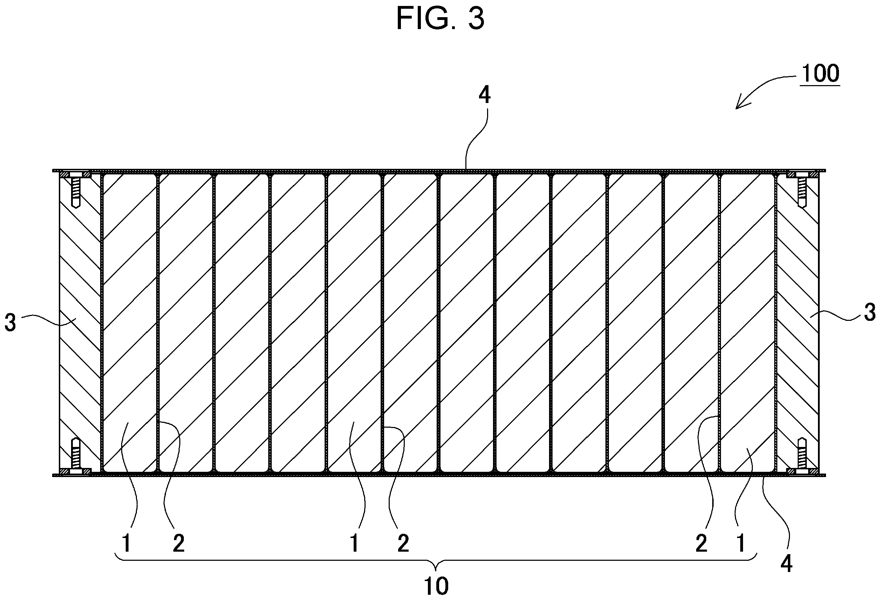

Power supply device 100 illustrated in a perspective view of Fig. 1, a vertical cross-sectional view of Fig. 2, and a horizontal cross-sectional view of Fig. 3 includes battery block 10 in which a plurality of battery cells 1 are stacked in a thickness with separator 2 interposed therebetween, a pair of end plates 3 disposed on both end surfaces of battery block 10, and binding bars 4 that connect the pair of end plates 3 and fix battery block 10 in a pressurized state via end plates 3.

### (Battery block 10)

In battery block 10, a plurality of battery cells 1, which are prismatic battery cells having a quadrangular outer shape, are stacked in a thickness with separator 2 interposed therebetween. The plurality of battery cells 1 are stacked such that top surfaces thereof are flush with each other to constitute battery block 10.

### (Battery cell 1)

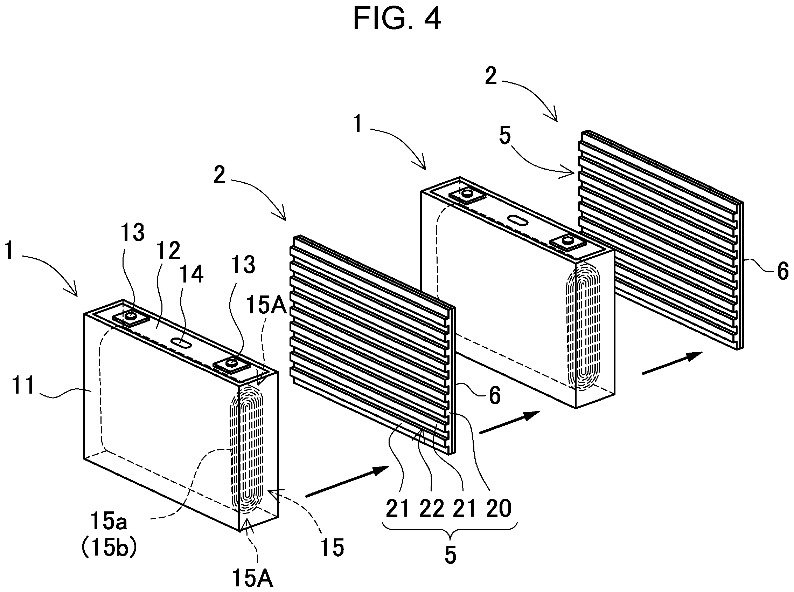

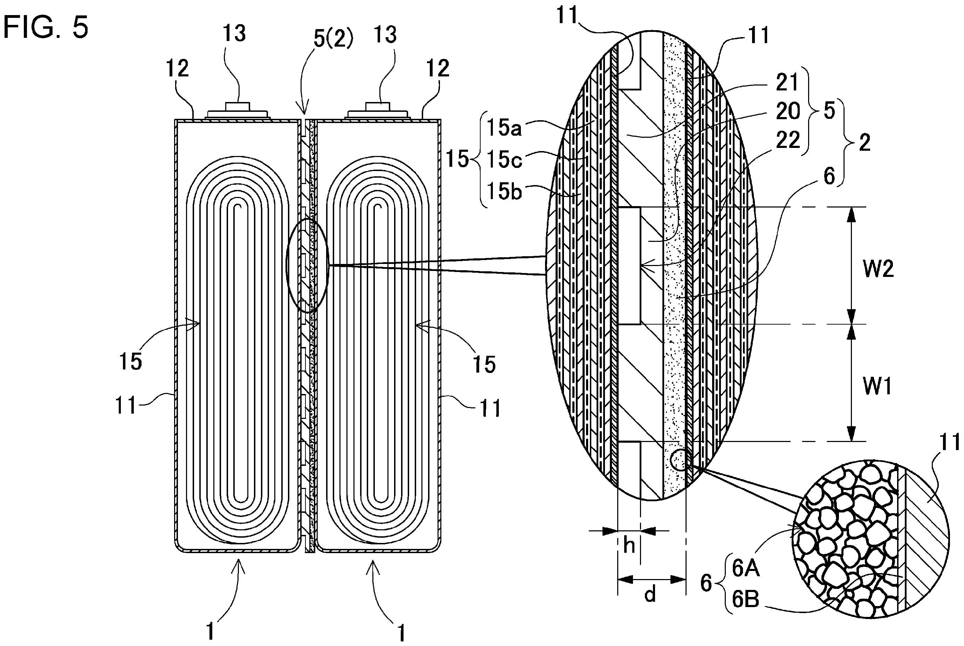

As illustrated in Figs. 4 and 5, in each of battery cells 1, electrode 15 is inserted into battery case 11 whose bottom is closed, and sealing plate 12 is laser-welded and airtightly fixed to an upper end opening part, so that the inside has a sealed structure. Further, the inside of battery case 11 is filled with an electrolyte solution (not illustrated). As illustrated in Fig. 1, sealing plate 12 is provided with a pair of positive and negative electrode terminals 13 protruding upward at both end parts of the top surface. Safety valve 14 is provided between electrode terminals 13. Safety valve 14 is opened to release internal gas when an internal pressure of battery cell 1 rises to more than or equal to a predetermined value. Safety valve 14 prevents an increase in internal pressure of battery cell 1.

Battery cell 1 is a lithium ion secondary battery. Power supply device 100 provided with a lithium ion secondary battery serving as battery cell 1 has an advantage in that a charging capacity per volume and weight can be increased. However, battery cell 1 may be any other chargeable battery such as a non-aqueous electrolyte secondary battery other than the lithium ion secondary battery.

### (End plates 3, binding bars 4)

Each of end plates 3 is a metal sheet substantially coinciding in outer shape with battery cell 1 and is not deformed by being pressed by battery block 10, and binding bars 4 are connected to both side edges of end plate 3. End plates 3 connect stacked battery cells 1 in a pressurized state, and binding bars 4 fix battery block 10 in the pressurized state at a predetermined pressure.

### (Separator 2)

Separator 2 is sandwiched between stacked battery cells 1, suppresses a decrease in fluidity of the electrolyte solution while absorbing expansion of battery cells 1 due to an increase in internal pressure, and further insulates adjacent battery cells 1. Battery block 10 has bus bars (not illustrated) fixed to electrode terminals 12 of adjacent battery cells 1 to connect battery cells 1 in series or in parallel. In battery cells 1 connected in series, since a potential difference is generated between battery cases 11, battery cells 1 are insulated and stacked by separator 2. Although battery cells 1 connected in parallel cause no potential difference to be generated between battery cases 11, battery cells 1 are stacked while being thermally insulated by separator 2 to prevent induction of thermal runaway.

Separator 2 illustrated in the enlarged sectional view of Fig. 5 has a stacked structure of elastomer layer 5 and plastic foam layer 6 having different deformation amounts with respect to a pressing force. Elastomer layer 5 and plastic foam layer 6 having different deformation amounts with respect to the pressing force are elastically deformed so as to be pressed by expanding battery cell 1 and become thin, and absorb the expansion of battery cell 1. In power supply device 100, in order to miniaturize battery block 10 and increase the charging capacity, it is important to thin separator 2 to absorb the expansion of battery cell 1. Thus, entire thickness (d) of separator 2 having a stacked structure is, for example, in a range from 2 mm to 8 mm inclusive, more preferably in a range from 1.5 mm to 5 mm inclusive.

Elastomer layer 5 of separator 2 is a non-foamed rubber-like elastic body or foamed rubber. Elastomer layer 5 can elastically deform and absorb the expansion of battery cell 1 with a hardness of, for example, A30 degrees to A90 degrees. As elastomer layer 5, a synthetic rubber sheet is suitable. As the synthetic rubber sheet, any one of fluororubber, isoprene rubber, styrene butadiene rubber, butadiene rubber, chloropron rubber, nitrile rubber, hydrogenated nitrile rubber, folylisobutylene rubber, ethylene propylene rubber, ethylene vinyl acetate copolymer rubber, chlorosulfonated polyethylene rubber, acrylic rubber, epichlorohydrin rubber, urethane rubber, silicone rubber, thermoplastic olefin rubber, ethylene propylene diene rubber, butyl rubber, and polyether rubber can be used singly or in a stacked state of a plurality of the synthetic rubber sheets. In particular, the ethylene propylene rubber, the ethylene vinyl acetate copolymer rubber, the chlorosulfonated polyethylene rubber, the acrylic rubber, the fluororubber, and the silicone rubber have excellent heat insulating properties, and thus can realize high safety until a temperature of battery cell 1 rises to a high temperature. Further, when elastomer layer 5 is made of urethane rubber, it is particularly preferable to use thermoplastic polyurethane rubber or foamed polyurethane rubber.

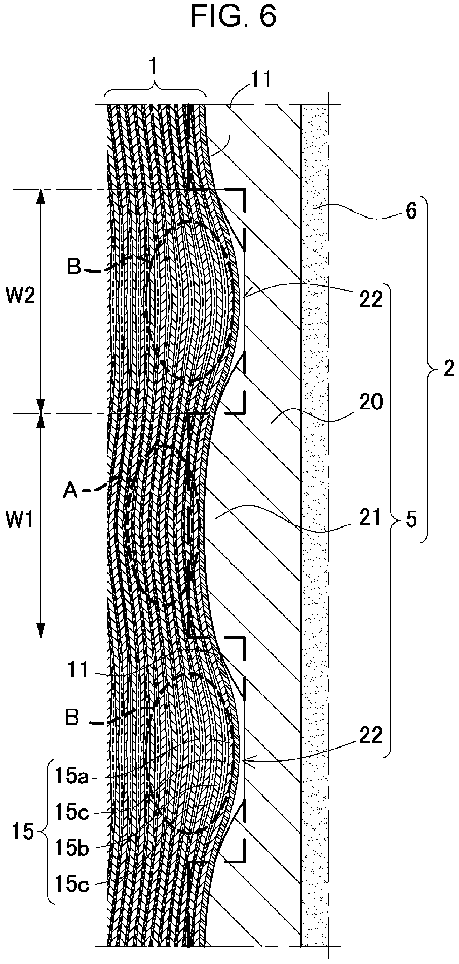

Separator 2 illustrated in Fig. 4 and Fig. 5 has a cross section in a comb-teeth shape by alternately disposing a plurality of rows of parallel ridges 21 and a plurality of rows of parallel grooves 22 on a surface of plate-shaped part 20, which is a surface facing a battery cell surface. In separator 2, the plurality of rows of parallel ridges 21 locally press the surface of expanding battery cell 1. In battery cell 1 whose surface is pressed by the plurality of rows of parallel ridges 21, a region pressed by the parallel ridges 21 becomes a recess, and a region facing the parallel grooves 22 protrudes, and battery cell 1 is deformed into a wave shape. The enlarged cross-sectional view of the main part of Fig. 6 exaggeratedly illustrates a state in which the surface of battery cell 1 is pushed by parallel ridges 21 and deformed into a wave shape. Battery cell 1 whose surface is deformed into a wave shape deforms a surface of electrode 15 having a stacked structure housed in battery case 11 into a wave shape. In electrode 15 having the stacked structure, region A which is pressed by the plurality of rows of parallel ridges 21 to become the recess has a high density, and protruding region B which is a region facing parallel grooves 22 has a low density. Therefore, low density region B is generated in a stripe manner, and low density region B improves the fluidity of the electrolyte solution. Further, since separator 2 described above generates low density region B in a stripe manner in electrode 15 while absorbing the expansion of battery cell 1 by the elastic deformation of elastomer layer 5, separator 2 is characterized in that low density region B can be generated in a stripe manner in electrode 15 to improve the fluidity of the electrolyte solution even at the time of expansion of battery cell 1 in which the fluidity of the electrolyte solution decreases.

Battery cell 1 illustrated in Figs. 4 to 6 is a prismatic battery in which a stacked surface of battery case 11 on which separator 2 is stacked is a quadrangular shape, positive and negative electrode layers 15a, 15b having an elongated band shape are wound to form spiral electrode 15, and spiral electrode 15 is housed in battery case 11 as a plate shape pressed in a planar shape. In electrode 15, elongated band-shaped positive and negative electrode layers 15a, 15b are stacked with insulating sheet 15c interposed therebetween, and wound to form spiral electrode 15, and spiral electrode 15 is pressed into a planar shape and housed in rectangular battery case 11. In separator 2 of elastomer layer 5, as illustrated in Fig. 4, parallel ridges 21 and parallel grooves 22 are arranged in an attitude extending in a width direction of band-shaped positive and negative electrode layers 15a, 15b. In separator 2, parallel ridges 21 are arranged in parallel with an extending direction of U-shaped curved part 15A of spiral electrode 15, and high density region A and low density region B extending in the width direction of electrode layers 15a, 15b are formed in a strip shape on the surface of electrode 15, so that high density region A and low density region B can be naturally provided in a stripe shape on spiral electrode 15 to improve the fluidity of the electrolyte solution.

Lateral width (W1) and height (h) of parallel ridges 21 and opening width (W2) of parallel grooves 22 are set to a dimension that allows parallel ridges 21 to press the surface of battery case 11 and deform into a wave shape in consideration of the hardness of elastomer layer 5. In separator 2 in which a hardness of elastomer layer 5 is A30 degrees to A90 degrees, for example, lateral width (W1) of parallel ridges 21 is in a range from 1 mm to 20 mm inclusive, preferably in a range from 2 mm to 10 mm inclusive, height (h) is in a range from 0.1 mm to 2 mm inclusive, preferably in a range from 0.2 mm to 1.5 mm inclusive, opening width (W2) of parallel grooves 22 is in a range from 1 mm to 20 mm inclusive, preferably in a range from 2 mm to 10 mm inclusive, and ratio (W1/W2) of lateral width (W1) of parallel ridges 21 to opening width (W2) of parallel grooves 22 is in a range from 0.1 to 10 inclusive, preferably in a range from 0.5 to 2 inclusive so that separator 2 can be deformed into a wave shape by pressing metal battery case 11 of battery cell 1.

In separator 2 of elastomer layer 5, a deformation amount of battery case 11 can be increased by increasing height (h) of parallel ridges 21 to increase opening width (W2) of parallel grooves 22. However, when parallel ridges 21 are too high, separator 2 becomes thick and buckles easily. Therefore, height (h) of parallel ridges 21 is set within the above range in consideration of the thickness allowed for separator 2 and the fact that battery case 11 can be deformed into a wave shape by being locally pressed. Further, opening width (W2) of parallel grooves 22, and ratio (W1/W2) of lateral width (W1) of parallel ridges 21 to opening width (W2) of parallel grooves 22 specify a pitch at which the surface of battery case 11 is deformed into a wave shape, and thus are set within the above ranges in consideration of setting the fluidity of the electrolyte solution to a preferable state while the expansion of battery cell 1 is supported by the plurality of rows of parallel ridges 21. For example, in power supply device 100 in which battery cell 1 is a prismatic lithium ion battery, battery case 11 is an aluminum plate having a thickness of 0.3 mm, an area of the stacked surface is 100 cm², lateral width (W1) of parallel ridges 21 and opening width (W2) of parallel grooves 22 are 5 mm, a height of parallel ridges 21 is 0.5 mm, a hardness of elastomer layer 5 is A60 degrees, and the number of battery cells 1 to be stacked is 12, the surface facing separator 2 is deformed into a wave shape in a state where battery cell 1 expands, and the fluidity of the electrolyte solution can be improved.

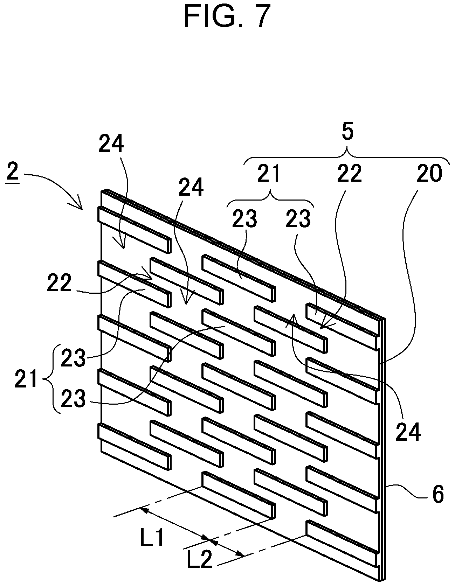

Separator 2 illustrated in Fig. 4 has a structure in which an entire length of the plurality of rows of parallel ridges 21 extending in a lateral width direction (horizontal direction in the drawing) of battery cell 1 is substantially equal to a lateral width of battery cell 1, and a facing surface of battery cell 1 is pressed by the plurality of rows of parallel ridges 21 extending in a streak parallel to each other. Further, as illustrated in Fig. 7, separator 2 can also be divided into the plurality of parallel ridges 21 extending in a longitudinal direction. In separator 2 illustrated in Fig. 7, cut part 24 is provided at an intermediate part of parallel ridges 21 to divide one row of the parallel ridges 21 into a plurality of convex parts 23. Further, in adjacent parallel ridges 21, convex parts 23 are arranged in a staggered manner when viewed from a front. That is, the positions of convex parts 23 are shifted left and right between adjacent parallel ridges 21 such that convex part 23 of the other parallel ridge 21 is positioned at a position facing cut part 24 provided on one parallel ridge 21. In separator 2 illustrated in the drawing, in order to form convex parts 23 of parallel ridges 21 adjacent to each other into a staggered shape, cut parts 24 are also provided at both ends of parallel ridges 21 in every other row. As described above, the structure in which the plurality of divided convex parts 23 are arranged in a staggered shape has an advantage that the pressing force received from battery cell 1 can be uniformly dispersed. However, the plurality of divided convex parts can be arranged vertically and horizontally or randomly. Separator 2 including parallel ridges 21 having the shape described above is more easily elastically deformed than separator 2 having a structure in which parallel ridges 21 are not divided, and has an advantage that expansion of battery cell 1 can be effectively absorbed.

Furthermore, in separator 2 having the shape illustrated in Fig. 7, the ease of elastic deformation of parallel ridges 21 can be adjusted by adjusting length (L1) of convex part 23 and length (L2) of cut part 24. For example, separator 2 can be easily elastically deformed by increasing ratio (L2/L1) of length (L2) of cut part 24 to length (L1) of convex part 23, and on the contrary, separator 2 can be hardly elastically deformed by decreasing ratio (L2/L1). That is, separators 2 can be deformed more easily by dividing parallel ridges 21 into a plurality of parts than a structure in which parallel ridges 21 are not divided, and can be deformed more easily by adjusting ratio (L2/L1). Furthermore, ratio (L2/L1) of length (L2) of cut part 24 to length (L1) of convex part 23 can be changed depending on the region even on one surface facing battery cell 1. For example, ratio (L2/L1) can be increased to easily absorb the deformation in a region facing a central part where the deformation amount increases when battery cell 1 expands, and ratio (L2/L1) can be decreased to suppress the deformation in a region facing an outer peripheral part where the deformation amount during expansion is small.

Plastic foam layer 6 is more easily deformed than elastomer layer 5, and in a state where the expansion of battery cell 1 is small, the deformation of plastic foam layer 6 is larger than the deformation of elastomer layer 5, and plastic foam layer 6 absorbs the expansion of battery cell 1 more than elastomer layer 5. In a state where the expansion of battery cell 1 increases and the deformation of plastic foam layer 6 exceeds the elastic limit, elastomer layer 5 that is hardly deformed is deformed and absorbs the expansion. Plastic foam layer 6 that is more easily deformed than elastomer layer 5 is an open-cell or closed-cell foam. The open-cell plastic foam has a smaller Young's modulus than the closed-cell plastic foam. Therefore, the open-cell plastic foam layer is elastically deformed in a region where the expansion of battery cell 1 is small to effectively absorb the expansion. This is because when the open-cell foam is pressed and the cell is crushed, the air inside the foam is smoothly discharged. Since a thin film constituting the cell is deformed in the cell from which the air inside is exhausted, the deformation amount with respect to the pressing force increases. On the other hand, when the closed-cell foam is pressed and the cell is compressed, the air in the cell is pressurized, and thus the air cushion in the cell suppresses the deformation of the cell, so that the deformation with respect to the pressing force is smaller than that of the open-cell foam. In the open-cell plastic foam having a large deformation amount with respect to the pressing force, the Young's modulus can be adjusted by an expansion ratio and a porosity, and the Young's modulus can be decreased by increasing the porosity.

Even when the closed-cell plastic foam layer is pressed by battery cell 1 to compress the cell, the air in the cell is not pushed out, the air pressure increases in the cell to prevent the deformation of the cell, and an internal pressure in the cell increases as the cell is crushed to be small to suppress the deformation of the cell. Since the closed-cell plastic foam layer suppresses deformation of the air cushion of the cells in a state where the air cushion is pressed, the Young's modulus can be increased while achieving a high expansion ratio. Therefore, the expansion of battery cell 1 can be absorbed while reducing the material cost and the weight.

In separator 2 illustrated in the partially enlarged view of Fig. 5, non-foam layer 6B is provided on a surface of open-cell plastic foam layer 6. Non-foam layer 6B on the surface of separator 2 is in surface contact with the surface of battery cell 1 in a state of being sandwiched between battery cells 1. Separator 2 absorbs expansion of battery cell 1 by elastic deformation of foam layer 6A in a state where non-foam layer 6B is in close contact with the surface of battery cell 1. Therefore, separator 2 can absorb the expansion of battery cell 1 by deformation of foam layer 6A into a shape that follows the expansion of battery cell 1 while non-foam layer 6B is deformed into a curved shape along the surface of battery cell 1 that expands.

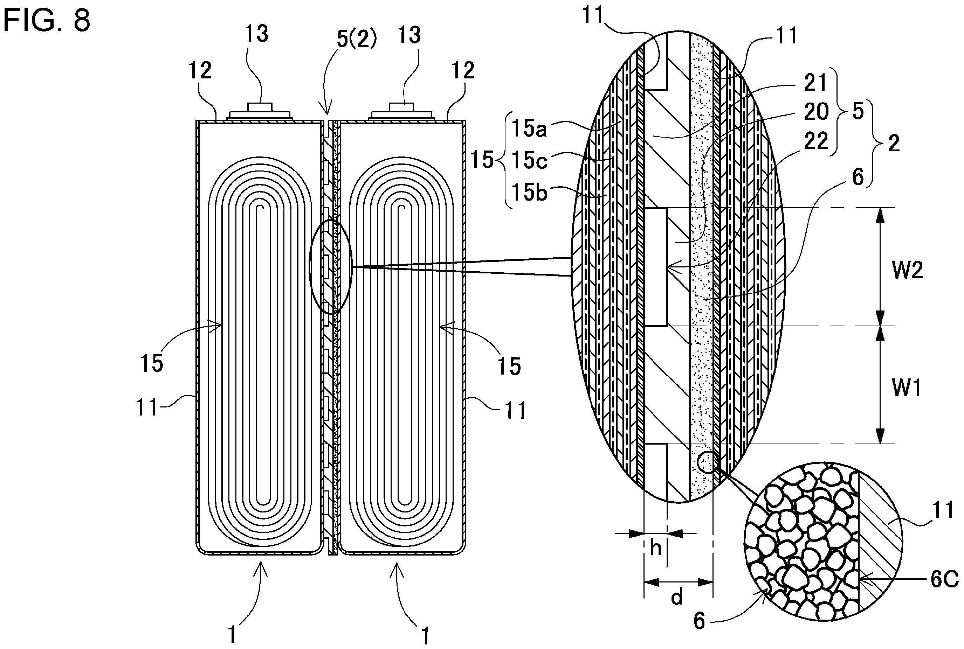

Separator 2 illustrated in the enlarged sectional view of Fig. 8 is foam layer 6C which is a surface of plastic foam layer 6 having open cells and from which cells obtained by cutting a stacked surface with battery cells 1 are exposed, and has an infinite number of irregularities formed on the surface by the open cells. In separator 2, an infinite number of continuous bubbles absorb dew condensation water adhering to the surface of battery cell 1, and electric leakage and a decrease in insulation resistance due to the dew condensation water can be suppressed. Since the power supply device is used in various temperature environments, dew condensation water may adhere to the surface due to a change in the temperature environment. The dew condensation water adhering to the surface of battery cell 1 flows down to the surface of an energization part to cause electric leakage or reduce the insulation resistance of the energization part. Separator 2 in which the open cells are exposed on the surface absorbs the dew condensation water to prevent adverse effects of the dew condensation water. Further, separator 2 in which the open cells are exposed on the surface and elastically deformed to be brought into close contact with the surface of battery cell 1 can transfer the dew condensation water to be absorbed into separator 2, and therefore has an advantage that the amount of the dew condensation water to be absorbed can be increased to effectively prevent adverse effects caused by the dew condensation water.

Plastic foam layer 6 is adjusted to have elasticity and a thickness that allow expanding battery cells 1 to absorb expansion by being pressurized and deformed. An amount of deformation of plastic foam layer 6 due to expansion of the battery cells can be adjusted by the type and apparent density of the plastic to be foamed, and the apparent density can be adjusted by a foaming rate. Open-cell plastic foam layer 6 has an apparent density, for example, in a range from 150 kg/m³ to 750 kg/m³ inclusive, preferably in a range from 200 kg/m³ to 500 kg/m³ inclusive, and has a thickness, for example, in a range from 0.2 mm to 7 mm inclusive, preferably in a range from 1 mm to 5 mm inclusive. As open-cell plastic foam layer 6, urethane foam is suitable. The separator of urethane foam has excellent temperature characteristics, and can be compressed to 50% for 22 hours at 100°C, for example, to have a compression set of less than or equal to 20%.

In separator 2, plastic foam layer 6 is stacked on one surface of elastomer layer 5. As illustrated in Figs. 4 and 5, separator 2 is stacked between battery cells 1 adjacent to each other and sandwiched from both sides. Separator 2 presses the surface of one battery cell 1 adjacent to elastomer layer 5, and plastic foam layer 6 presses the surface of the other battery cell 1. In separator 2, parallel ridges 21 of elastomer layer 5 press one surface of battery cell 1 to improve fluidity of the electrolyte solution on the battery cell surface facing elastomer layer 5. In separator 2 having this structure, as illustrated in Fig. 4, in a state in which the plurality of battery cells 1 and separator 2 are alternately stacked to form battery block 10, parallel ridges 21 of elastomer layer 5 can be brought into contact with the stacked surfaces of all battery cells 1 by stacking so that the surfaces of elastomer layer 5 provided with parallel ridges 21 and parallel grooves 22 are oriented in the same direction, and the fluidity of the electrolyte solution of all battery cells 1 can be improved.

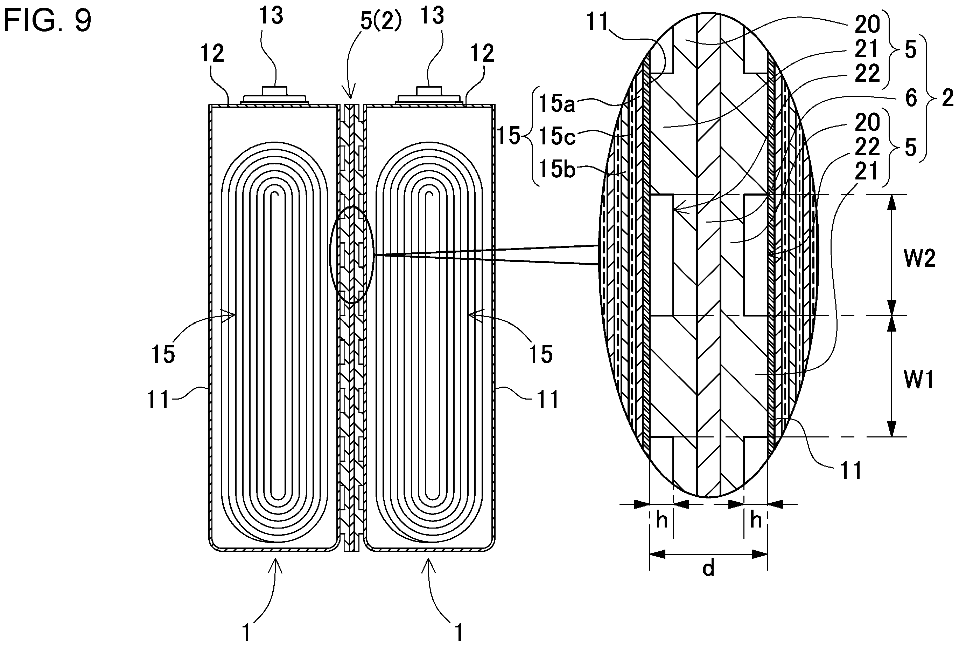

In separator 2 illustrated in Fig. 9, plastic foam layer 6 is sandwiched in the middle, and both sides of plastic foam layer 6 are formed as elastomer layers 5. In separator 2, parallel ridges 21 and parallel grooves 22 are provided in elastomer layers 5 on both surfaces, and battery cells 1 are pressed by parallel ridges 21 on both surfaces, so that the fluidity of the electrolyte solution on the surfaces of the respective battery cells can be improved.

In battery cell 1 described above, as illustrated in Fig. 4, plate-shaped spiral electrode 15 is housed in battery case 11 such that the axis along the width of battery cell 1. Therefore, separator 2 is stacked on the facing surface of battery cell 1 such that the extending direction of parallel ridges 21 and parallel grooves 22 is the width direction of battery cell 1. As described above, parallel ridges 21 and parallel grooves 22 of separator 2 are stacked so as to extend in the horizontal direction in the drawing, whereby parallel ridges 21 and parallel grooves 22 can be arranged on the surface of battery cell 1 so as to be parallel to the axis of spiral electrode 15. As a result, when battery cell 1 expands, the high density region and the low density region extending in the width direction of electrode layers 15a, 15b are formed in a stripe shape on the surface of spiral electrode 15, and the fluidity of the electrolyte solution can be improved.

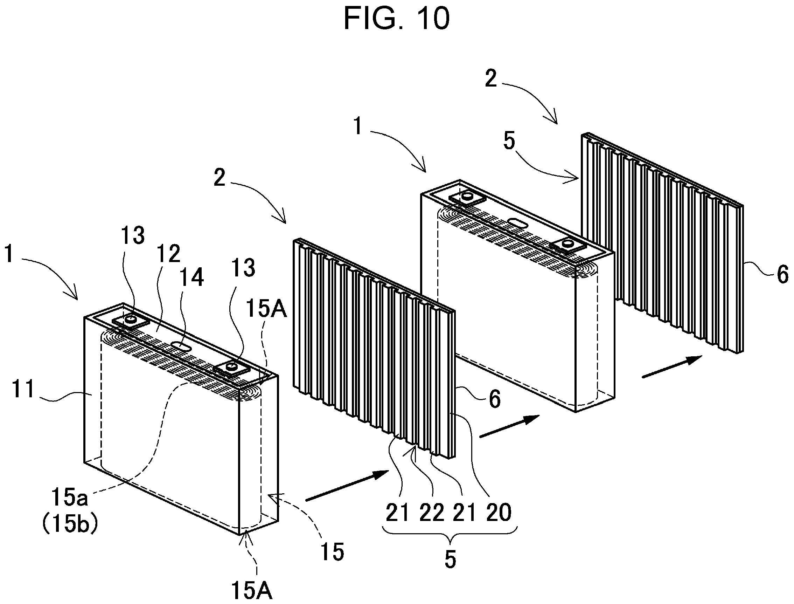

However, as illustrated in Fig. 10, in battery cell 1, plate-shaped spiral electrode 15 can also be housed in battery case 1 such that the axis along the height of battery cell 1 and the depth of battery case 11. Separator 2 stacked on battery cell 1 having this structure is stacked on the facing surface of battery cell 1 such that the extending direction of parallel ridges 21 and parallel grooves 22 is the height direction of battery cell 1. According to this structure, parallel ridges 21 and parallel grooves 22 of separator 2 are stacked on battery cells 1 so as to be in an attitude extending in the up-down direction in the drawing, whereby parallel ridges 21 and parallel grooves 2 can be arranged on the surface of battery cells 1 so as to be parallel to the axis of spiral electrode 15. As a result, when battery cell 1 expands, the high density region and the low density region extending in the width direction of electrode layers 15a, 15b are formed in a stripe shape on the surface of spiral electrode 15, and the fluidity of the electrolyte solution can be improved.

The power supply device described above can be used as a power source for a vehicle where electric power is supplied to a motor used for causing an electric vehicle to travel. As an electric vehicle on which the power supply device is mounted, an electric vehicle such as a hybrid automobile or a plug-in hybrid automobile that travels by both an engine and a motor, or an electric automobile that travels only by a motor can be used, and the power supply device is used as a power source for the vehicle. Note that, in order to obtain electric power for driving a vehicle, an example of constructing large-capacity and high-output power supply device 100 will be described below in which a large number of the above-described power supply devices are connected in series or in parallel, and a necessary controlling circuit is further added.

### (Power supply device for hybrid automobile)

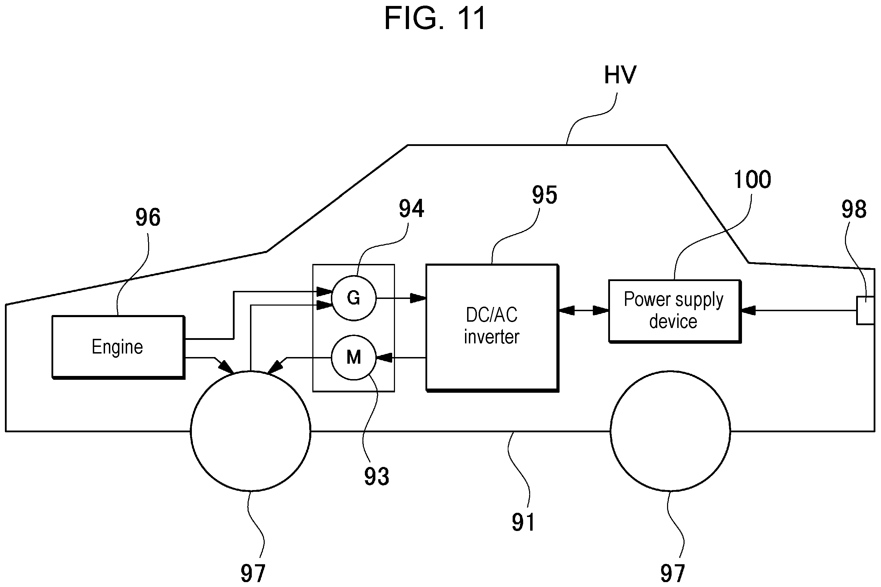

Fig. 11 illustrates an example in which the power supply device is mounted on the hybrid automobile that travels by both the engine and the motor. Vehicle HV illustrated in the drawing on which the power supply device is mounted includes: vehicle body 91; engine 96 and motor 93 for traveling that cause vehicle body 91 to travel; wheels 97 that are driven by engine 96 and motor 93 for traveling; power supply device 100 that supplies electric power to motor 93; and power generator 94 that charges a battery of power supply device 100. Power supply device 100 is connected to motor 93 and power generator 94 via DC/AC inverter 95. Vehicle HV travels using both motor 93 and engine 96 while charging and discharging the battery of power supply device 100. Motor 93 is driven in a region where engine efficiency is low, for example, during acceleration or low-speed traveling, and causes the vehicle to travel. Motor 93 is driven by electric power supplied from power supply device 100. Power generator 94 is driven by engine 96 or by regenerative braking when the vehicle is braked to charge the battery of power supply device 100. Note that, as illustrated in Fig. 11, vehicle HV may be provided with charging plug 98 for charging power supply device 100. Connecting charging plug 98 to an external power source enables charging of power supply device 100.

### (Power supply device for electric automobile)

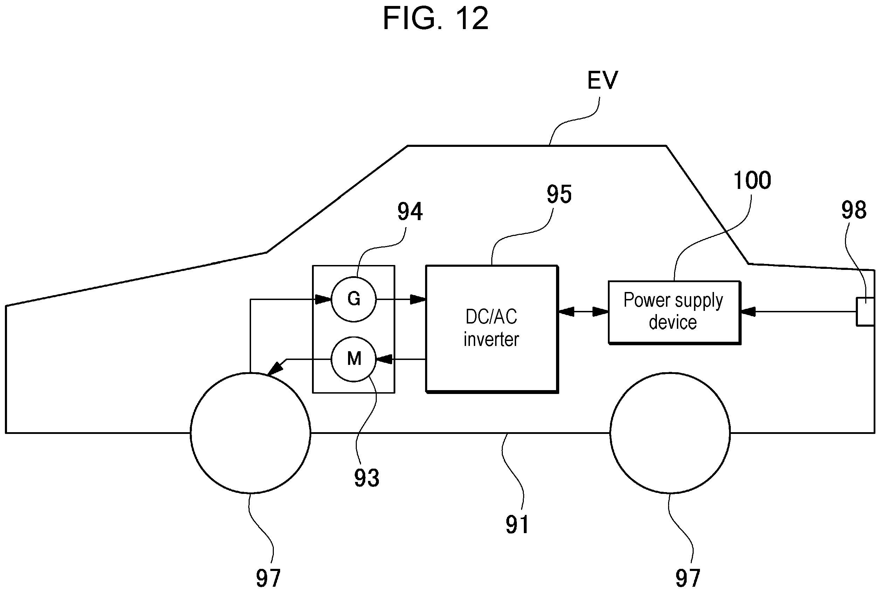

Further, Fig. 12 illustrates an example in which a power supply device is mounted on an electric automobile that travels only with a motor. Vehicle EV illustrated in the drawing on which the power supply device is mounted includes vehicle body 91, motor 93 for traveling that causes vehicle body 91 to travel, wheels 97 driven by motor 93, power supply device 100 that supplies electric power to motor 93, and power generator 94 that charges the battery of power supply device 100. Power supply device 100 is connected to motor 93 and power generator 94 via DC/AC inverter 95. Motor 93 is driven by electric power supplied from power supply device 100. Power generator 94 is driven by the energy at the time of applying regenerative braking to vehicle EV and charges the battery of power supply device 100. Further, vehicle EV includes charging plug 98, and power supply device 100 can be charged by connecting charging plug 98 to an external power source.

### (Power supply device for power storage device)

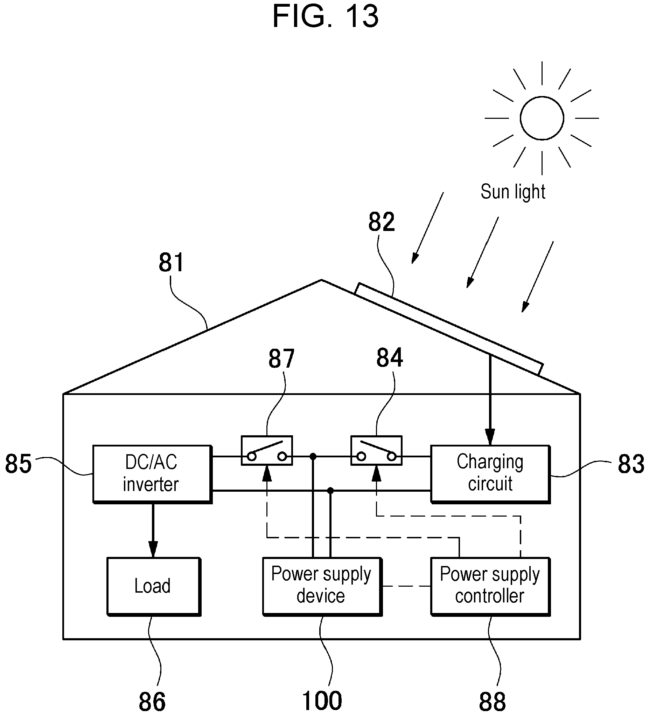

Furthermore, the application of the power supply device of the present invention is not limited to the power source for the motor that causes a vehicle to travel. The power supply device according to the exemplary embodiment can also be used as a power source for a power storage device that stores electricity by charging a battery with electric power generated by solar power generation, wind power generation, or the like. Fig. 13 illustrates a power storage device that charges and stores the battery of power supply device 100 with solar battery 82.

The power storage device illustrated in Fig. 13 charges the battery of power supply device 100 with electric power generated by solar battery 82 disposed on a roof, a rooftop, or the like of building 81 such as a house or a factory. The power storage device charges the battery of power supply device 100 via charging circuit 83 with solar battery 82 serving as a charging power source, and then supplies electric power to load 86 via DC/AC inverter 85. Thus, this power storage device includes a charge mode and a discharge mode. In the power storage device illustrated in the figure, DC/AC inverter 85 is connected to power supply device 100 via discharging switch 87, and charging circuit 83 is connected to power supply device 100 via charging switch 84. Discharging switch 87 and charging switch 84 are turned on and off by power supply controller 88 of the power storage device. In the charge mode, power supply controller 88 turns on charging switch 84 and turns off discharging switch 87 to allow charging from charging circuit 83 to power supply device 100. Further, when charging is completed and the battery is fully charged or when the battery is in a state where a capacity of a predetermined value or more is charged, power supply controller 88 turns off charging switch 84 and turns on discharging switch 87 to switch the mode to the discharge mode and allows discharging from power supply device 100 to load 86. Furthermore, it is also possible to simultaneously supply electric power to load 86 and charge power supply device 100 by turning on charging switch 84 and turning on discharging switch 87 as necessary.

Further, although not illustrated, the power supply device can also be used as a power source of a power storage device that performs power storage by charging a battery using midnight electric power at night. The power supply device that is charged with midnight electric power is charged with the midnight electric power that is surplus electric power generated by a power station, and outputs the electric power during the daytime when an electric power load increases, which can limit peak electric power during the daytime to a small value. Furthermore, the power supply device can also be used as a power source charged with both output of a solar battery and the midnight electric power. This power supply device can efficiently perform power storage using both electric power generated by the solar battery and the midnight electric power effectively in consideration of weather and electric power consumption.

The power storage system as described above can be suitably used for applications such as a backup power supply device that can be mounted on a rack of a computer server, a backup power supply device for a wireless base station such as a cellular phone, a power source for household or factory power storage, a power source for street lamps, and the like, a power storage apparatus combined with a solar battery, and a backup power source for traffic lights and traffic indicators for roads.

### INDUSTRIAL APPLICABILITY

The power source device according to the present invention is suitably used as a power source for a large current used for a power source of a motor for driving an electric vehicle such as a hybrid automobile, a fuel battery automobile, an electric automobile, or an electric motorcycle. Examples thereof include power supply devices for plug-in hybrid electric automobiles and hybrid electric automobiles capable of switching between an EV traveling mode and an HEV traveling mode, electric automobiles, and the like. Further, the present invention can be appropriately used for applications such as a backup power supply device that can be mounted on a rack of a computer server, a backup power supply device for a wireless base station such as a cellular phone, a power source for power storage for home and factory use, a power source for street lamps, and the like, a power storage apparatus combined with a solar battery, and a backup power source for traffic lights and the like.

### REFERENCE MARKS IN THE DRAWINGS

100: power supply device
1: battery cell
2: separator
3 : end plate
4: binding bar
5: elastomer layer
6: plastic foam layer
6A: foam layer
6B: non-foam layer
6C: foam layer from which cells are exposed
10: battery block
11: battery case
12: sealing plate
13: electrode terminal
14: safety valve
15: electrode
15A: U-shaped curved part
15a: electrode layer
15b: electrode layer
15c: insulating sheet
20: plate-shaped part
21: parallel ridge
22: parallel groove
23: convex part
24: cut part
81: building
82: solar battery
83: charging circuit
84: charging switch
85: DC/AC inverter
86: load
87: discharging switch
88: power supply controller
91: vehicle body
93: motor
94: power generator
95: DC/AC inverter
96: engine
97: wheel
98: charging plug
HV, EV: vehicle

## Claims

1. A power supply device comprising:
a battery block including a plurality of battery cells stacked in a thickness with a separator interposed between the plurality of battery cells;
a pair of end plates disposed on both end surfaces of the battery block; and
a binding bar connected to the pair of end plates and configured to fix the battery block in a pressurized state via the end plates,
wherein the separator includes an elastomer layer and a plastic foam layer which are stacked on each other,
the plastic foam layer including a larger amount of deformation with respect to a pressing force than the elastomer layer.

2. The power supply device according to Claim 1, wherein the elastomer layer is a non-foamed synthetic rubber.

3. The power supply device according to Claim 2, wherein the non-foamed synthetic rubber of the elastomer layer is any one of a fluororubber, an isoprene rubber, a styrene butadiene rubber, a butadiene rubber, a chloropron rubber, a nitrile rubber, a hydrogenated nitrile rubber, a folylisobutylene rubber, an ethylene propylene rubber, an ethylene-vinyl acetate copolymer rubber, a chlorosulfonated polyethylene rubber, an acrylic rubber, an epichlorohydrin rubber, a urethane rubber, a silicone rubber, a thermoplastic olefin rubber, an ethylene propylene diene rubber, a butyl rubber, and a polyether rubber.

4. The power supply device according to any one of Claims 1 to 3, wherein the plastic foam layer is an open-cell plastic foam.

5. The power supply device according to any one of Claims 1 to 3, wherein the plastic foam layer is a closed-cell plastic foam.

6. The power supply device according to any one of Claims 1 to 5, wherein the plastic foam layer is a urethane foam.

7. The power supply device according to any one of Claims 1 to 6, wherein the elastomer layer includes a comb-teeth-shaped cross-sectional shape by alternately disposing a plurality of rows of parallel ridges and a plurality of rows of parallel grooves on a surface of a plate-shaped part, the surface facing each of the plurality of battery cells.

8. The power supply device according to Claim 7, wherein a lateral width (W1) of the parallel ridges and an opening width (W2) of the parallel grooves are in a range from 1 mm to 20 mm, inclusive.

9. The power supply device according to Claim 7 or 8, wherein a height (h) of the parallel ridges is in a range from 0.1 mm to 2 mm, inclusive.

10. The power supply device according to any one of Claims 7 to 9, wherein a ratio (W1/W2) between a lateral width (W1) of the parallel ridges and an opening width (W2) of the parallel grooves are in a range from 0.1 to 10, inclusive.

11. The power supply device according to any one of Claims 7 to 10, wherein
each of the plurality of battery cells includes an electrode that is a plate-shaped electrode in which positive electrode layer and negative electrode layer extending in a band shape are spirally wound and pressed into a planar shape, and
the elastomer layer of the separator includes the parallel ridges and the parallel grooves extend in a width direction of the positive electrode layer and negative electrode layer that are in a band shape.

12. The power supply device according to any one of Claims 1 to 11, wherein the separator includes a two-layer structure of the elastomer layer and the plastic foam layer.

13. The power supply device according to any one of Claims 1 to 11, wherein the separator includes a three-layer structure in which a plurality of elastomer layers are stacked on both surfaces of the plastic foam layer, the plurality of the elastomer layers each being the elastomer layer.

14. An electric vehicle including the power supply device according to any one of Claims 1 to 13, the electric vehicle comprising:
the power supply device;
a motor for traveling to which electric power is supplied from the power supply device;
a vehicle body on which the power supply device and the motor are mounted; and
wheels driven by the motor to cause the vehicle body to travel.

15. A power storage device including the power supply device according to any one of Claims 1 to 13, the power storage device comprising:
the power supply device; and
a power supply controller that controls charging and discharging to the power supply device, wherein the power supply controller enables charging to the secondary battery cell by electric power from an outside, and performs control to charge the secondary battery cell.
